# EUROPEAN PATENT APPLICATION

(11) **EP 4 837 686 A1**
(43) Date of publication of application: **11.11.2026**
(21) Application number: 26176728.9
(22) Date of filing: 05.05.2026
(51) Int. Cl.: B23K 9/173, B23K 9/09, B23K 9/095

(54) **METHOD OF USING ARC ENERGY FOR CONTROLLING WELD PARAMETERS**

(30) Priority: 06.05.2025 US 202519199982
(71) Applicant: The ESAB Group Inc., North Bethesda, MD 20852 (US)
(72) Inventor: Juliusson, Lars, Västra Frölunda (SE); Lennartsson, Karl, Göteborg (SE); Karlsson, Daniel, Kungsängen (SE); Kubicek, Rastislav, Göteborg (SE); Lennartsson, Bo, Örebro (SE); Wadström, Patrik, Kungälv (SE)
(74) Representative: Murgitroyd & Company

(57) **Abstract**

A method performed by a welding system is provided, comprising supplying weld power to a consumable electrode that advances toward a workpiece. The weld power includes a direct current (DC) waveform having cycles that each strikes an arc, and transfers a molten metal droplet, from the consumable electrode to the workpiece. An energy supplied to the consumable electrode across the cycles is controlled by, for each cycle: integrating the weld power to produce a total energy supplied to the consumable electrode; comparing the total energy to a target energy to produce a compare result; and when the compare result indicates that the total energy is not equal to the target energy, adjusting the DC waveform to drive the total energy to the target energy for an ongoing cycle or a subsequent cycle of the DC waveform.

## Description

### TECHNICAL FIELD

The present disclosure relates to controlling an arc welding process.

### BACKGROUND

A welding system employs a feed assembly to continuously advance a consumable electrode toward a workpiece at a wire feed speed (WFS), while supplying weld power to a tip of the electrode (i.e., to the electrode tip). The weld power includes pulse periods (also referred to as "cycles") that melt the electrode tip to form molten metal droplets (referred to simply as "droplets"), form arcs between the electrode tip and the workpiece, and facilitate transference of the droplets from the electrode tip to the workpiece to form a weld. The size of the droplets per pulse period, and thus the amount of metal transferred to the weld, depend on parameters of the pulse period of the weld power and on the WFS.

To establish a desired weld pattern on the workpiece, the welding system varies (e.g., alternately increases and decreases) the WFS, which correspondingly varies an amount of metal deposited on the workpiece over a given time period. To achieve the desired weld pattern, the weld power should be controlled (e.g., adjusted) in correspondence with the WFS in order to melt the correct amount of metal during the given time period. That is, changes to the weld power should be made in correspondence with changes to the WFS; however, controlling (i.e., deriving accurate adjustments of) the weld power based on the WFS, presents a challenge. This is because the WFS is only indirectly related to the amount of metal that the weld power melts, and measurements of the WFS can be inaccurate and/or delayed due to the mechanics of the feed assembly. When used to control the weld power, the indirect nature of the WFS on melting the electrode tip and the inaccurate measurements of the WFS can lead to inaccurate adjustments to the weld power.

### SUMMARY

According to a first aspect of the present invention there is provided a method performed by a welding system including: supplying weld power to a consumable electrode that advances toward a workpiece, wherein the weld power includes a direct current (DC) waveform having cycles that each strikes an arc, and transfers a molten metal droplet, from the consumable electrode to the workpiece; and controlling an energy supplied to the consumable electrode across the cycles by, for each cycle: integrating the weld power to produce a total energy supplied to the consumable electrode; comparing the total energy to a target energy to produce a compare result; and when the compare result indicates that the total energy is not equal to the target energy, adjusting the DC waveform to drive the total energy to the target energy for an ongoing cycle or a subsequent cycle of the DC waveform.

In some aspects, the techniques described herein relate to a method, wherein: the cycles of the DC waveform respectively include only current pulses that have a positive polarity.

In some aspects, the techniques described herein relate to a method, wherein: the cycles have a frequency that changes gradually over a transition period that spans the cycles; and controlling includes integrating, comparing, and adjusting for each cycle over the transition period while the frequency changes to maintain the total energy equal to the target energy for each cycle over the transition period.

In some aspects, the techniques described herein relate to a method, wherein: the consumable electrode advances toward the workpiece at a wire feed speed (WFS) that changes gradually from a first WFS to a second WFS gradually over the transition period.

In some aspects, the techniques described herein relate to a method, wherein: controlling includes controlling a droplet size of the molten metal droplet across the cycles based on the energy; comparing includes comparing the total energy to the target energy, which produces a defined droplet size; and adjusting includes adjusting the DC waveform to drive the total energy to the target energy to produce the defined droplet size during the ongoing cycle or the subsequent cycle.

In some aspects, the techniques described herein relate to a method, wherein: the consumable electrode advances toward the workpiece at a wire feed speed (WFS) that changes gradually from a first WFS to a second WFS gradually over a transition period that spans the cycles, a frequency of the cycles changes gradually in correspondence with the WFS, and controlling includes integrating, comparing, and adjusting for each cycle over the transition period to maintain the droplet size at the defined droplet size over the transition period.

In some aspects, the techniques described herein relate to a method, wherein: each cycle includes a current pulse; and adjusting includes adjusting one or more of a peak level or a duty cycle of each current pulse.

In some aspects, the techniques described herein relate to a method, wherein: each cycle includes a background current level and the current pulse; and adjusting further includes adjusting the background current level.

In some aspects, the techniques described herein relate to a method, wherein: the current pulse includes a rising edge, a peak, and a falling edge is configured to transfer the molten metal droplet to the workpiece during the falling edge.

In some aspects, the techniques described herein relate to a method, further including: implementing a weld power regulation feedback loop concurrently with controlling the energy.

In some aspects, the techniques described herein relate to a method, wherein: integrating includes integrating a produce of a current level of the DC waveform and a voltage level corresponding to a power dissipation over each cycle.

In some aspects, the techniques described herein relate to a method, wherein: the DC waveform is configured for a short-arc welding process.

In some aspects, the techniques described herein relate to a method, wherein: the DC waveform is configured for a pulsed welding process.

In some aspects, the techniques described herein relate to a welding apparatus including: a power supply for supplying weld power to a consumable electrode that advances toward a workpiece, wherein the weld power includes a direct current (DC) waveform having cycles that each strikes an arc, and transfers a molten metal droplet, from the consumable electrode to the workpiece; and a controller to control an energy supplied by the power supply to the consumable electrode across the cycles by, for each cycle: integrating the weld power to produce a total energy supplied to the consumable electrode; comparing the total energy to a target energy to produce a compare result; and when the compare result indicates that the total energy is not equal to the target energy, causing the power supply to adjust the DC waveform to drive the total energy to the target energy for on ongoing cycle or a subsequent cycle of the DC waveform.

In some aspects, the techniques described herein relate to a welding apparatus, wherein: the cycles of the DC waveform respectively include only current pulses that have a positive polarity.

In some aspects, the techniques described herein relate to a welding apparatus, wherein: the cycles have a frequency that changes gradually over a transition period that spans the cycles; and the controller is configured to perform controlling by integrating, comparing, and causing the power supply to adjust for each cycle over the transition period while the frequency changes to maintain the total energy equal to the target energy for each cycle over the transition period.

In some aspects, the techniques described herein relate to a welding apparatus, wherein: the consumable electrode advances toward the workpiece at a wire feed speed (WFS) that changes gradually from a first WFS to a second WFS gradually over the transition period.

According to a second aspect of the present invention there is provided a welding apparatus, wherein the controller is configured to perform: controlling by causing the power supply to control a droplet size of the molten metal droplet across the cycles based on the energy; comparing by comparing the total energy to the target energy, which produces a defined droplet size; and causing the power supply to adjust the DC waveform to drive the total energy to the target energy to produce the defined droplet size during the ongoing cycle or the subsequent cycle.

In some aspects, the techniques described herein relate to a welding apparatus, wherein: the consumable electrode advances toward the workpiece at a wire feed speed (WFS) that changes gradually from a first WFS to a second WFS gradually over a transition period that spans the cycles, a frequency of the cycles changes gradually in correspondence with the WFS, and the controller is configured to perform controlling by integrating, comparing, and causing the power supply to adjust for each cycle over the transition period to maintain the droplet size at the defined droplet size over the transition period.

In some aspects, the techniques described herein relate to a welding apparatus, wherein: each cycle includes a current pulse; and the controller is configured to cause the power supply to adjust by causing the power supply to adjust one or more of a peak level or a duty cycle of each current pulse.

### BRIEF DESCRIPTION OF THE DRAWINGS

FIG. 1 is an illustration of an example welding system in which embodiments directed to using arc energy (also referred to as "energy") to control weld parameters during a welding process may be implemented.
FIG. 2 is a block diagram of a power supply and a power supply controller (PSC) of the welding system, according to an example embodiment.
FIG. 3 is a flowchart of an example method of using the energy to control the weld parameters for a welding process.
FIG. 4 is an illustration of using energy to control a current waveform for a welding process, and an illustration of droplet transference to a workpiece that results from the current waveform.
FIG. 5 is another illustration of using energy to control a current waveform for a welding process, and an illustration of droplet transference to a workpiece that results from the current waveform.
FIG. 6 is an illustration of using energy to control a current waveform for a welding process while a WFS changes gradually during a transition period.
FIG. 7 is a flowchart of an example method of using energy to control a current waveform for a welding process while a WFS changes gradually during a transition period.
FIG. 8 is a diagram of the PSC accordance to an embodiment.

### DETAILED DESCRIPTION

### Overview

In an embodiment, a method performed by a welding system comprises: supplying weld power to a consumable electrode that advances toward a workpiece, wherein the weld power includes a direct current (DC) waveform having cycles that each strike an arc, and transfers a molten metal droplet, from the consumable electrode to the workpiece; and controlling an energy supplied to the consumable electrode across the cycles by, for each cycle: integrating the weld power to produce a total energy supplied to the consumable electrode; comparing the total energy to a target energy to produce a compare result; and when the compare result indicates that the total energy is not equal to the target energy, adjusting the DC waveform to drive the total energy supplied by the power supply to the target energy for an ongoing cycle or a subsequent cycle of the DC waveform.

### Example Embodiments

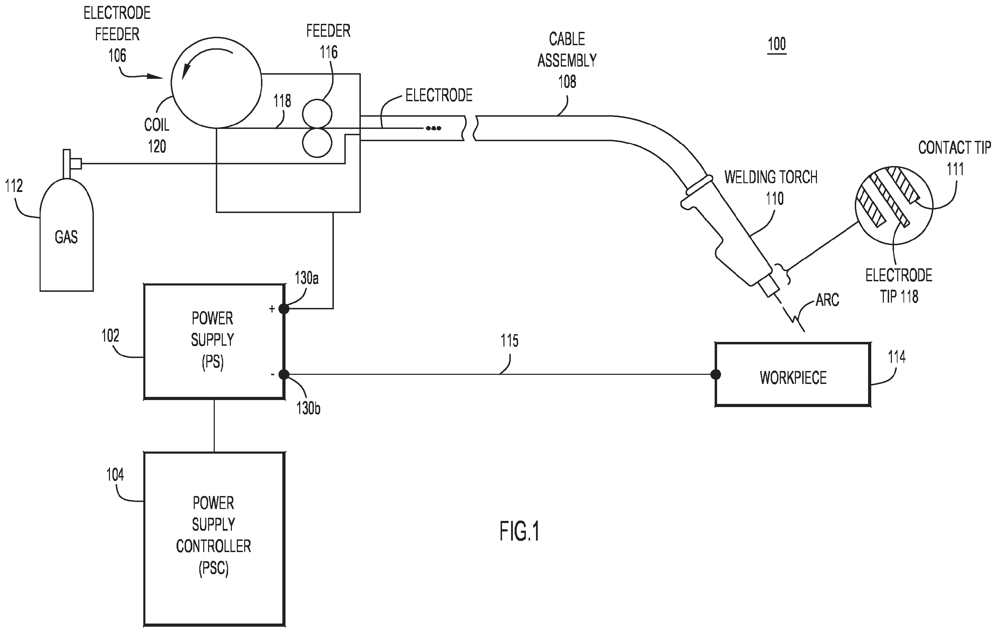

With reference to FIG. 1, there is an illustration of an example metal inert gas (MIG)/metal active gas (MAG) welding system 100 (also referred to as a "welding apparatus"), in which embodiments directed to using arc energy (also referred to simply as "energy") to control weld parameters during a welding process may be implemented. The embodiments are presented in the context of MIG/MAG welding by way of example only. It is understood that the embodiments may be employed generally in any known or hereafter developed welding environments, such as, but not limited to, tungsten inert gas (TIG) welding, flux cored arc welding (FCAW), shielded metal arc welding (SMAW) or stick welding, submerged arc welding (SAW), and so on. Welding system 100 includes: a power supply 102; a power supply controller (PSC) 104 coupled to and configured to control the power supply; an electrode feeder 106 coupled to the power supply; a cable assembly 108 coupled to the electrode feeder; a welding torch 110 (also referred to as a "welding gun") coupled to the cable assembly and having a sturdy metal contact tip 111 that extends from an end of the welding gun or torch; a gas container 112 coupled to the cable assembly; and a workpiece 114 coupled to the power supply through at least a return path/cable 115. In the ensuing description, the terms "weld" and "welding" are synonymous and interchangeable.

Electrode feeder 106 includes an electrode feeder 116 to feed an electrode from a coiled electrode 120 through cable assembly 108 and through contact tip 111 of welding torch 110, which is in electrical contact with the electrode. Under control of PSC 104, power supply 102 generates weld power that drives the welding process. In welding processes that involve a pulsed or periodic waveform, the weld power typically includes a series of weld current pulses. Power supply 102 provides the weld power from an output terminal 130a of the power supply to the electrode, through electrode feeder 116, cable assembly 108, and welding torch 110, while the cable assembly also delivers a shielding gas from gas container 112 to the welding torch. Return path/cable 115 provides an electrical return path from workpiece 114 to an input terminal 130b of power supply 102

During a welding process, an electrode tip 118 of the electrode is brought into near contact with workpiece 114, and the weld power (i.e., weld current and weld voltage) supplied by power supply 102 to the welding torch creates an arc between workpiece 114 and electrode tip 118 (also referred to as an "electrode stickout") extending through the contact tip. To control the welding process, PSC 104 controls/causes power supply 102 to generate the weld power (e.g., weld current) at a desired level for the welding process, based on feedback in the form of measurements of the weld current and weld voltage (e.g., arc voltage) supplied by the power supply to the welding process. The measurements may be produced by current and voltage sense points in power supply 102 and/or at sense points that are remote from the power supply, such as in cable assembly 108 or welding torch 110.

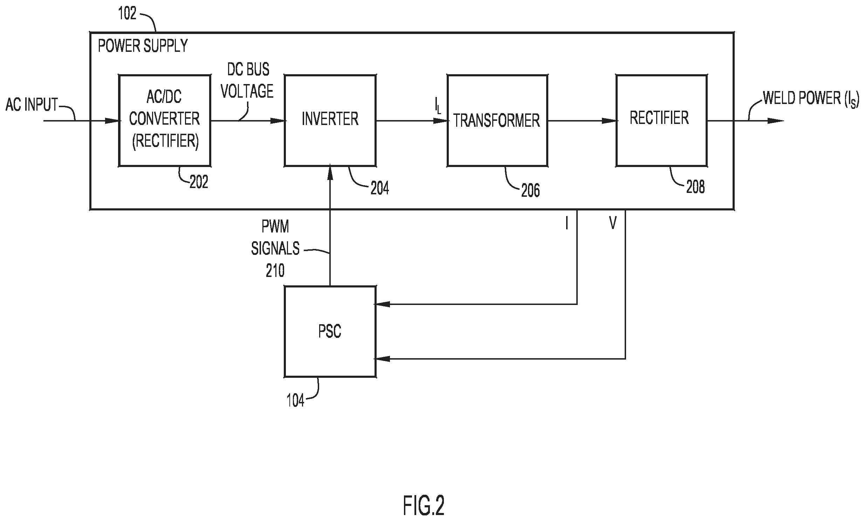

FIG. 2 is a block diagram of power supply 102 with PSC 104, according to an embodiment. Power supply 102 includes an alternating current (AC)/direct current (DC) converter 202 to receive AC input power (e.g., from AC mains or a generator), a power inverter (referred to simply as an "inverter") 204, a high-frequency transformer 206, and a rectifier 208 coupled to one another. AC/DC converter 202 includes a diode rectifier to convert the AC input power to a constant, rectified DC voltage (also referred to as a DC "bus" voltage), and provide the DC bus voltage to an input of inverter 204. Under control of PSC 104, inverter 204, transformer 206, and rectifier 208 collectively operate as a weld process regulator to convert the DC bus voltage to a desired weld power supplied by power supply 102 for a welding process.

Inverter 204 comprises a set of high-speed semiconductor switching devices (i.e., power switches) that are pulse width modulated (i.e., switched on and off at a switching frequency) responsive to pulse width modulation (PWM) waveforms 210 (also referred to as "PWM signals"), generated by PSC 104 and applied to control terminals of the switching devices, to convert the DC bus voltage to an AC (power) signal or waveform including a voltage and a primary current I_{L} that flows into transformer 206. Such operation is referred to as "PWM operation" of inverter 204. Example switching frequencies may be in a range from 20 kHz-200 kHz, although other switching frequencies above and below this range may be used. Inverter 204 supplies the AC signal to transformer 206. Transformer 206 converts the voltage and current of the AC signal from inverter 204 to a transformed AC signal having desired levels of a voltage and a secondary current I_{S} for the welding process, and supplies the transformed AC signal to rectifier 208. Rectifier 208 rectifies the transformed AC signal to produce the weld power based on the secondary current I_{S} and supplies the same to the welding process.

As shown in FIG. 2, power supply 102 includes a current sense point to provide to PSC 104 a sensed current I (i.e., a sensed weld current) that represent secondary current I_{S} or primary current I_{L}, for example, produced by the power supply 102. Power supply 102 also includes a voltage sense point to provide to PSC 104 a sensed voltage V (i.e., a sensed weld voltage) representative of a voltage produced by the power supply (e.g., a voltage across the power supply terminals, the arc voltage, and the like). The sensed current and voltage represent current and voltage measurements (i.e., measured current and voltage) of the weld power, which provide real-time feedback from the welding process to PSC 104.

PSC 104 receives the current and voltage measurements. To control primary current I_{L} (and correspondingly secondary current I_{S}) generated by power supply 102, PSC 104 controls or dynamically adjusts PWM waveforms 210 applied to inverter 204 based on desired or target settings (i.e., set points) for primary current (or secondary current), voltage, energy/power, and based on the current and/or voltage measurements from the welding process. For example, PSC 104 may increase an on-time of cycles of PWM waveforms 210 applied to inverter 204 to increase primary/secondary current I_{L}/I_{S}, and vice versa. For a given cycle of the PWM, the on-time corresponds to a duty cycle of the given cycle, and may also be referred to as a pulse width. PSC 104 may also adjust a frequency (which is an inverse of a period) of the cycles of PWM waveforms 210. In this way, PSC 104 implements a sample-based feedback control loop to control PWM waveforms 210 based on the current and voltage measurements.

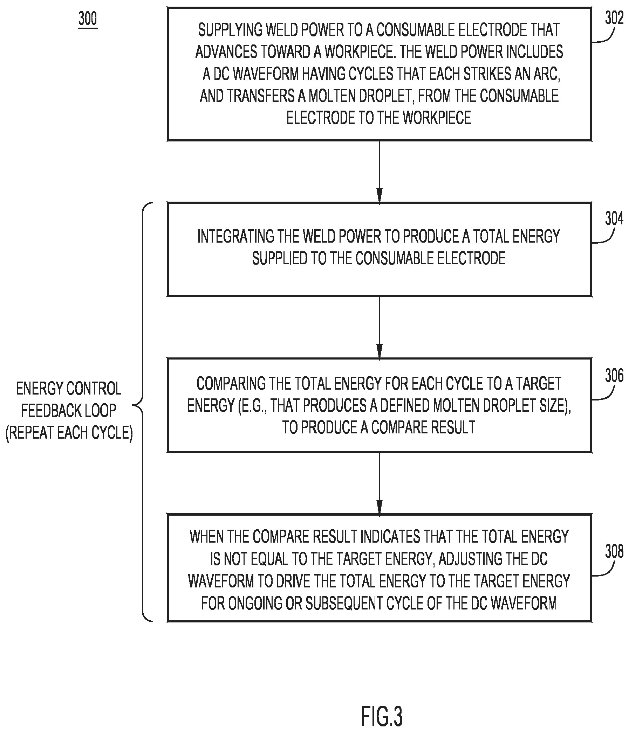

Embodiments presented herein use arc energy (i.e., an integral of weld power over time) supplied to electrode tip 118 during a welding process to control various weld parameters of the welding process. The weld parameters may include current waveform parameters, such as a current level, a duty cycle, and a period. The weld parameters may also include non-current waveform parameters, such as a droplet size, for example. The embodiments are described below in connection with FIGs. 3-7. In the ensuing description, the terms "energy" and "arc energy" may be used synonymously and interchangeably.

FIG. 3 is a flowchart of an example method 300 of using energy supplied to electrode tip 118 during a welding process to control weld parameters of the welding process. At 302, welding system 302 advances electrode tip 118 toward workpiece 114 at a wire feed speed (WFS). The WFS may be held constant or may vary over time. While electrode tip 118 advances, power supply 102 generates weld power (i.e., energy per unit time) in the form of weld current and voltage (e.g., an arc voltage) under control of PSC 104. Power supply 102 supplies the weld power to electrode tip 118. The weld current includes a current waveform having repetitive pulse periods or cycles corresponding to repetitive cycles of the arc welding process. Each cycle of the weld current includes a background current level and also includes a current pulse. Each cycle strikes an arc on workpiece 114. In a first example, the current waveform is a direct current (DC) waveform (also referred to as a "DC current waveform") that has only a positive polarity, and which does not switch polarity to a negative polarity. An advantage of generating a current waveform with only the positive polarity is to reduce the complexity, cost, and power dissipated by power supply 102. In a second example, the current waveform is an AC waveform.

Each cycle supplies to electrode tip 118 a total energy that melts an amount of metal to form a molten metal droplet (referred to simply as a "droplet") at the electrode tip, and sheers the droplet from electrode tip 118 to transfer the droplet to workpiece 114 to form a weld. The current waveform transfers one droplet per cycle. The current waveform may be a short-arc current waveform configured for a short-arc welding process (which may include a controlled short-arc process, for example) that intentionally shorts electrode tip 118 to workpiece 114 every cycle. Alternatively, the current waveform may be a pulsed current waveform configured for a pulsed welding process that does not intentionally short electrode tip 118 to workpiece 114 during each cycle.

PSC 104 continuously regulates the weld power, including the weld current and the arc voltage, using a weld power regulation feedback loop as described above. The weld power regulation feedback loop may regulate nominal current waveform parameters that are selected synergically based on factors such as wire electrode material (filler material), wire electrode diameter, shielding gas composition, and a WFS, for example. Such factors may be entered into or configured to welding system 100 by an operator, for example. The combination of nominal current waveform parameters and the factors upon which they are based may be referred to as a "native data set" for the welding process. Concurrent with, and in addition to, regulating the weld power, PSC 104 performs next operations 304-308, descried below, to control a total energy supplied during each cycle with respect to a desired or target (total) energy per cycle. Operations 304-308 represent an energy control feedback loop used to control the weld parameters. Thus, PSC 104 executes concurrent weld power regulation and energy control feedback loops.

In a non-limiting example, PSC 104 may control the energy during each cycle to control a size of the droplet (i.e., a droplet size) formed during each cycle. Such control assumes a known relationship between the energy and the droplet size, such that a given/defined energy translates/corresponds to a given/defined droplet size, and vice versa. For example, the larger and smaller the energy, the larger and smaller the droplet size, respectively. The known relationship/correspondence between the energy and the droplet size enables PSC 104 to use the energy as a proxy for the droplet size, and for controlling the energy as a proxy for controlling the droplet size.

PSC 104 may record in memory information that defines the known correspondence between the total energy for a cycle and the defined droplet size for the cycle. For example, PSC 104 may store, in a table or other data structure, predetermined mappings/associations between different total energies (that vary across a total energy range) and corresponding ones of different defined droplet sizes (that vary across a droplet size range) may be stored in memory. In another example, PSC 104 may access from memory a predetermined equation to compute a total energy based on a defined droplet size based on properties of the consumable electrode. In one example, PSC 104 may store in memory an energy (e.g., x Joules) per melted amount of metal (e.g., y grams of metal).

At 304, PSC 104 monitors/determines a total energy for/across each cycle (also referred to as a current cycle). To do this, PSC 104 resets the total energy to zero at a start of each cycle. Then, PSC 104 integrates or accumulates the weld power across the duration of each cycle, to produce an integrated energy that accumulates into the total energy at/by the end of each cycle. For example, PSC 104 computes the total energy according to: ${\int }_{0}^{T} I \cdot V dt$, where I is the weld current, V is a voltage, and T is a duration of each cycle. Voltage V may include, but is not limited to, any voltage related to electrode tip 118 that contributes/is related to a power dissipation over the electrode tip. For example, voltage V may include an arc voltage or an anode-cathode voltage from the electrode tip 118 to workpiece 114.

At 306, PSC 104 repeatedly compares the integrated energy to a target energy across each cycle to produce multiple compare results for each cycle. In the example, the target energy is known to melt a known amount of metal and produce a defined droplet size. The target energy may be predetermined, entered into welding system 100 by an operator, or generated in real-time during the welding process.

At 308, when the compare results indicate that the total energy at the end of each cycle is not equal to the target energy, PSC 104 adjusts/varies one or more parameters of the current waveform to drive the total energy supplied by power supply 102 to electrode tip 118 toward the target energy for subsequent or next cycles of the current waveform. For example, when the total energy is less than or greater than the target energy, PSC 104 respectively adjusts the one or more parameters of the current waveform to increase or decrease the target energy. On the other hand, when the total energy is equal to the target energy, PSC 104 causes power supply 102 to maintain the current waveform (i.e., PSC 104 does not adjust the parameters of the current waveform).

Additionally, and/or alternatively, PSC 104 may adjust the one or more parameters during each cycle (i.e., in the current/ongoing cycle, before the next cycle). For example, when the compare results indicate that the integrated energy has reached the target energy before an end of the current/ongoing cycle, PSC 104 may control power supply 102 to immediately terminate a current/ongoing pulse of the current/ongoing cycle. Also, when the compare results indicate that the integrated energy will not reach the target energy by the expected end of the current/ongoing cycle, PSC 104 may boost the current level of the current/ongoing pulse.

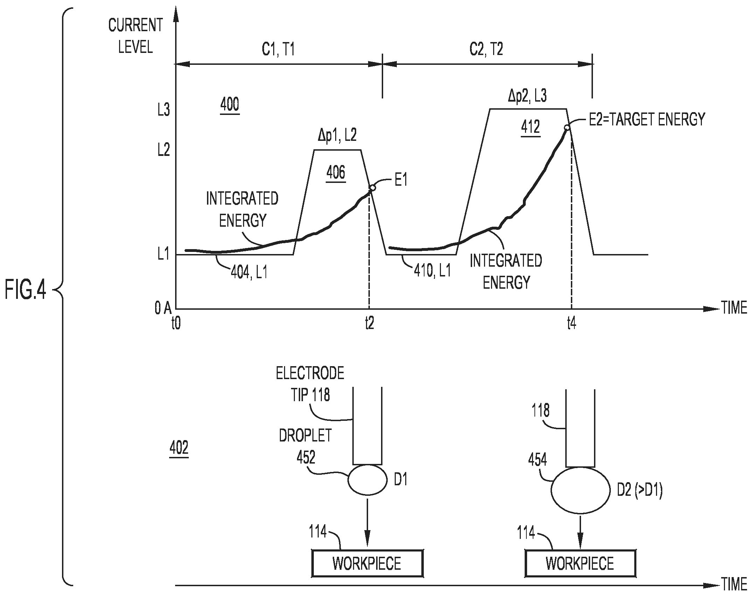

FIG. 4 shows an example of using the total energy (per cycle) to control parameters of the current waveform (i.e., to control current waveform parameters) and to control droplet size (per cycle). FIG. 4 includes a top plot that shows successive cycles of a current waveform 400 generated by power supply 102 for the welding process under control of PSC 104. Current waveform 400 is a DC waveform that only has a positive polarity. FIG. 4 also includes a bottom illustration 402 that presents successive droplets formed on electrode tip 118 as a result of the successive cycles of current waveform 400. The top plot and bottom illustration share a common time axis.

Referring to the top plot, current waveform 400 includes a cycle C1 (also referred to as a "current" (as in "present") cycle C1). Cycle C1 includes a background current segment 404 (also referred to as a "first" background current segment) starting at t0, and a pulse 406 following the background current segment. Background current segment 404 and pulse 406 form a period T1 (and a frequency F1 = 1/T1) of cycle C1. That is, period T1 includes background current segment 404 and pulse 406. Background current segment 404 of cycle C1 occurs after a previous cycle (not shown) has transferred a previously formed droplet to workpiece 114. Cycle C1 forms a (new) droplet on electrode tip 118, and transfers that droplet to workpiece 114.

Background current segment 404 has a non-zero background current level L1. Background current level L1 may be a lowest non-zero current level that is sufficiently high (i.e., high enough) to maintain an existing arc, but insufficiently high (i.e., too low) to sheer-off the droplet. Pulse 406 rises from background current level L1 of background current segment 404 to a peak current level L2 (where L2 > L1), and has a peak width or duration Δp1. Peak current level L2 remains constant (i.e. flat) for the duration of the peak. Peak duration Δp1 corresponds to a duty cycle of cycle C1. In the example, at t2, a falling or trailing edge of pulse 406 detaches or "sheers-off" the droplet formed by cycle C1 from electrode tip 118, which results in the transfer of the droplet to workpiece 114.

The example of FIG. 4 assumes that a target energy E2 corresponding to a defined droplet size D2 is configured on welding system 100. Starting at t0, PSC 104 resets the total energy to zero, and then PSC 104 integrates energy across cycle C1 to produce a total (integrated) energy E1 at the end of cycle C1. PSC 104 determines that total energy E1 is less than targe energy E2. Accordingly, PSC 104 adjusts parameters of current waveform 400 to control power supply 102 to increase the weld power, and thus the total energy, supplied during a cycle C2 (i.e., a next cycle) of current waveform 400 toward target energy E2.

Cycle C2 includes a background current segment 410 followed by a pulse 412. Cycle C2 has a period T2, where T2 = T1 in the example of FIG. 2. Background current segment 410 has a current level L1, which is equal to that of background current segment 404. Because total energy E1 of cycle C1 is less than target energy E2, PSC 104 causes power supply 102 to adjust pulse 412 to a peak current level L3 (where L3 > L1), and a peak duration Δp2. That is, PSC 104 controls power supply 102 to increase or boost the peak current level of pulse 412 relative to that of pulse 406, which correspondingly increases the weld power and total energy supplied by cycle C2 relative to cycle C1. PSC 104 may also control power supply 102 to increase the duty cycle of cycle C2 (and thus increase the pulse width of pulse 412) relative to that of cycle C1, and thus increase the pulse width of pulse 412 relative to pulse 406. At t4, a falling or trailing edge of pulse 412 sheers-off the droplet formed by cycle C2 from electrode tip 118, which results in the transfer of the droplet to workpiece 114.

Beginning at the start of cycle C2, PSC 104 resets the total energy to zero, and then integrates energy across cycle C2, to produce a total energy E2 at the end of cycle C2. PSC 104 determines that total energy E2 is equal to targe energy E2. Accordingly, PSC 104 maintains the parameters of current waveform 400 applied for cycle C2 for a next cycle of the current waveform. The process repeats for the next cycle(s).

Bottom illustration 402 shows a droplet 452 formed at electrode tip 118 by total energy E1 and transferred to workpiece 114 at time t2 of cycle C1. Bottom illustration 402 also shows a droplet 454 formed by total energy E2 (> E1) at electrode tip 118 and transferred to the workpiece at time t4 of cycle C2. Droplet 452 has a diameter D1 and droplet 454 has a diameter D2 that is greater than diameter D1. Diameter D2 represents the defined droplet size mapped to target energy E2.

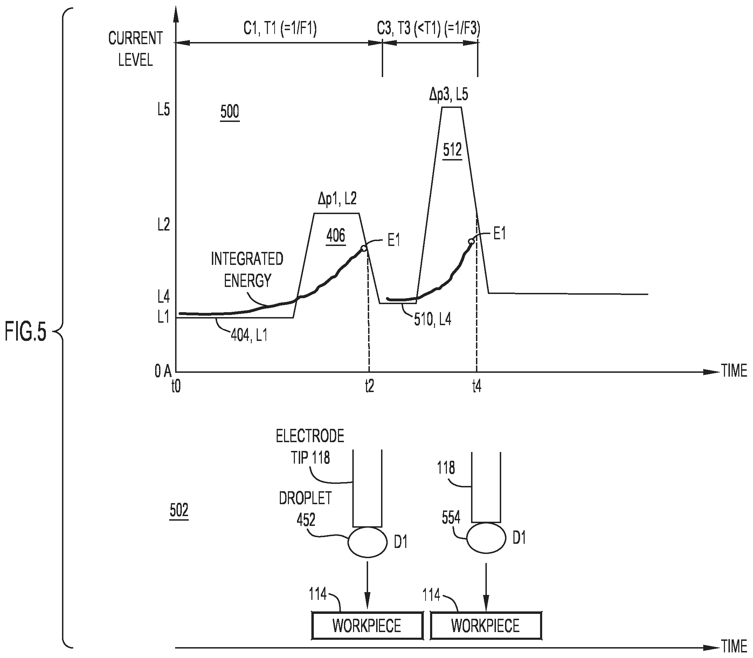

FIG. 5 shows another example of using the total energy to control the current waveform and droplet size. FIG. 5 includes a top plot that shows successive cycles of a current waveform 500, which is slightly different from current waveform 400, as described below. FIG. 5 also includes a bottom illustration 502 that presents successive droplets formed on electrode tip 118 as a result of the successive cycles of current waveform 500. The top plot and bottom illustration share a common time axis. In the example of FIG. 5, cycles C1, C3 of current waveform 500 have different periods T1, T3 (T1 > T3), respectively. That is, cycle C3 is shorter than cycle C1, and a frequency F3 of cycle C3 is greater than frequency F1 of cycle C1.

The example of FIG. 5 assumes that a target energy E1 corresponding to a defined droplet size D1 is configured on welding system 100. Cycle C3 is shorter than cycle C1 leaving less time to integrate the weld power. Thus, PSC 104 controls/causes power supply 102 to boost the weld power supplied by cycle C3 relative to C1 to maintain an equal total energy (i.e., target energy E1) across both cycles. In the example of FIG. 5, PSC 104 causes power supply 102 to boost the current levels of both a background current segment 510 and a pulse 512 of cycle C3 relative to background current segment 404 and pulse 406 of cycle C1. For example, PSC 104 controls power supply 102 to generate background current segment 510 with a background current level L4 > L1, and a generates pulse 512 with a peak current level L5 > L2 over a peak duration Δp3. Therefore, during cycle C3, the energy integrates more quickly up to total energy E1.

In an alternative example in which T3 > T1 (i.e., F1 < F3), PSC 104 may control power supply 102 to reduce the weld power supplied during cycle C3 relative to C1. For example, PSC 104 may cause power supply 102 to reduce one or more of the current levels of background current segment 510 and pulse 512 relative to background current segment 404 and pulse 406.

Bottom illustration 502 shows droplet 452 formed at electrode tip 118 by total energy E1 (similar to illustration 402 of FIG. 4) and transferred to workpiece 114 at time t2 of cycle C1. Bottom illustration 502 also shows a droplet 554 formed by total energy E1 at electrode tip 118 and transferred to the workpiece at time t4 of cycle C3. The droplets have equal sizes even though the frequency increases from cycle C1 to cycle C2.

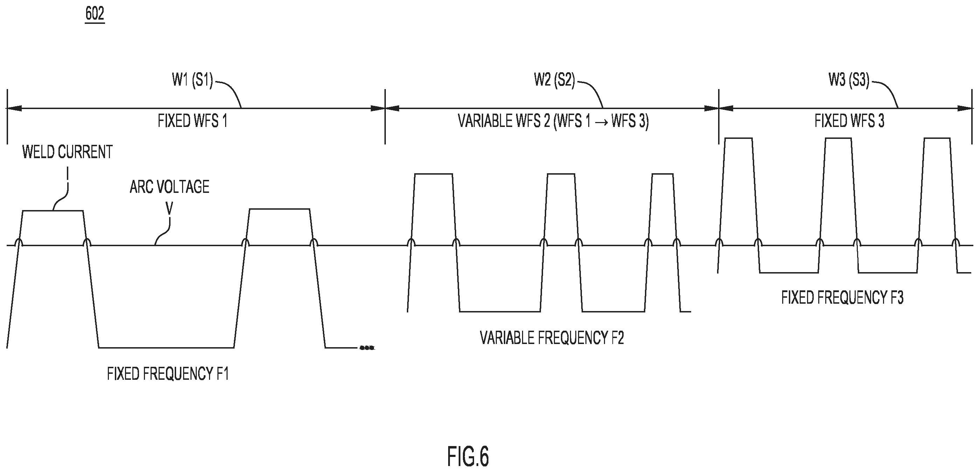

FIG. 6 is an illustration of controlling a current waveform 602 using the energy per cycle to maintain an approximately constant droplet size per cycle while the WFS changes. Controlling the droplet size in this manner may achieve a good quality desired weld pattern on workpiece 114. The energy supplied to electrode tip 118 relates/translates directly to the amount of melted metal that forms the droplet size. Therefore, the energy advantageously represents an accurate/direct vector for controlling the droplet size, compared to the WFS, for example.

Current waveform 602 includes successive waveform segments W1, W2, and W3 that span successive time segments S1, S2, and S3. Each waveform segment includes multiple cycles, similar to those described above. During waveform segment W1, welding system 100 advances electrode tip 118 toward workpiece 114 at a WFS WFS1 (e.g., 4 m/min) that remains constant. The cycles of waveform segment S1 have a frequency F1 (i.e., and a period T1) that is constant. An example cycle energy per droplet transferred may be approximately 27 Joules per droplet, which is to be maintained across next waveform segments W2 and W3. During waveform segment W2, welding system 100 advances electrode tip 118 toward workpiece 114 at a WFS WFS2 that gradually increases from WFS WFS1 (e.g., 4 m/min) to a WFS WFS3 (e.g., 8 m/min) (> WFS1). The cycles of waveform segment W2 have a frequency F2 that gradually increases in approximate correspondence with the WFS, from frequency F1 (i.e., period T1) to a frequency F3 (i.e. a period T3 < T1). Conversely, a period T2 of the cycles gradually decreases from period T1 to period T3. During waveform segment W3, welding system 100 advances electrode tip 118 toward workpiece 114 at WFS WFS3. The cycles of waveform segment W3 have frequency F3 (i.e., period T3) that remains constant.

PSC 104 implements the energy control feedback loop to maintain the constant total energy and constant droplet size. That is, PSC 104 monitors the total energy per cycle across all three waveform segments. PSC 104 adjusts the parameters of current waveform 602 cycle-by-cycle during each of the waveform segments to maintain the total energy per cycle supplied by power supply 102 equal to a target energy (e.g., 27 Joules in the example), in order to maintain the constant droplet size per cycle.

During static waveform segment W1, the energy control feedback loop holds the current waveform parameters approximately constant for each cycle due to the fixed WFS WFS1 and frequency corresponding to that WFS. Similarly, during static waveform segment W3, the energy control feedback loop also holds the current waveform parameters approximately constant for each cycle due the fixed WFS WFS3 and frequency corresponding to that WFS. In the example, WFS3 is twice WFS1. Therefore, the energy control feedback loop may control power supply 102 to supply twice the weld power for each cycle of waveform segment WF3 compared to waveform segment W1.

On the other hand, during transition waveform segment W2, the variable WFS WFS2 and frequency of each cycle gradually increase across the cycles. In response, the energy control feedback loop gradually adjusts the current waveform parameters across the cycles to cause power supply 102 to gradually increase the weld power across the cycles, to ensure that the total energy per cycle (and thus the droplet size) remains constant. For example, PSC 104 may cause power supply 102 to gradually increase one or more of the background current level, the peak current level, or the duty cycle, per cycle, to increase the weld power per cycle, while maintaining the total energy supplied per cycle constant.

The energy control feedback loop operates in reverse when the WFS gradually decreases from WFS WFS3 to WFS WFS1. During the reverse transition, the frequency of each cycle gradually decreases across the cycles. In response, PSC 104 causes power supply 102 to gradually decrease the weld power across the cycles to ensure that the total energy per cycle (and thus the droplet size) remains constant. PSC 104 may gradually decrease (i.e., cause power supply 102 to gradually decrease) one or more of the background current level, the peak current level, or the duty cycle, per cycle, to decrease the weld power per cycle.

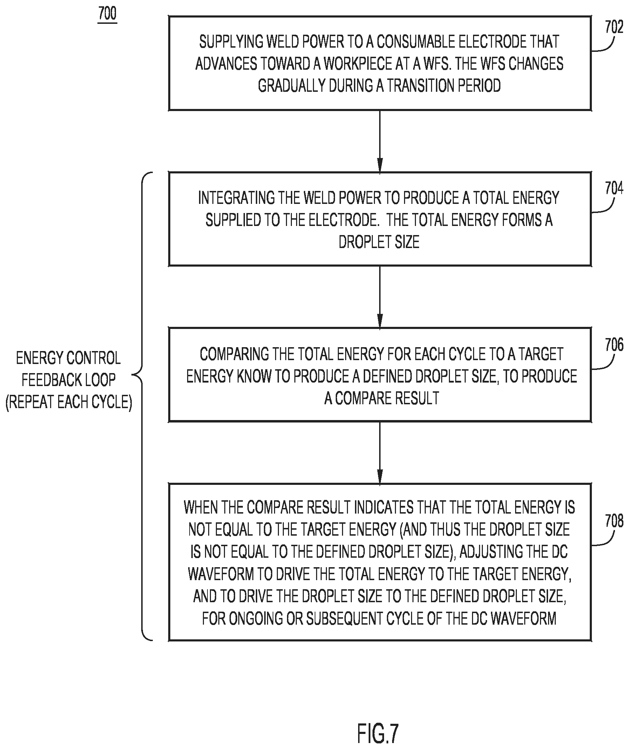

FIG. 7 is a flowchart of an example method 700 of using the energy to control the droplet size while the WFS changes during the transition period. At 702, welding system 100 advances electrode tip 118 toward workpiece 114 at the WFS that gradually changes over the transition period. Power supply 102 generates weld power including repetitive cycles of a DC waveform under control of PSC 104, and supplies the weld power to electrode tip 118. PSC 104 causes/controls power supply 102 to gradually change the frequency of the cycles of the DC waveform over the transition period in approximate correspondence with the WFS.

PSC 104 performs next operations 704-708 to control the droplet size per cycle over the transition period.

At 704, PSC 104 integrates the weld power to produce a total energy supplied to electrode tip 118 per cycle.

At 706, PSC 104 compares the total energy to a target energy known to produce a defined droplet size, to produce a compare result per cycle.

When the compare result indicates that the total energy is not equal to the target energy, at 708, PSC 104 adjusts parameters of the DC waveform supplied by power supply 102 to cause the power supply to drive the total energy to the target energy for a cycle of the DC waveform, which may be one or both of a current/ongoing cycle or a next/subsequent cycle of the DC waveform, which in turn drives the droplet size to the desired droplet size during the cycle. The process repeats across the transition period to maintain the droplet size at the desired droplet size per cycle as the WFS and the frequency change gradually.

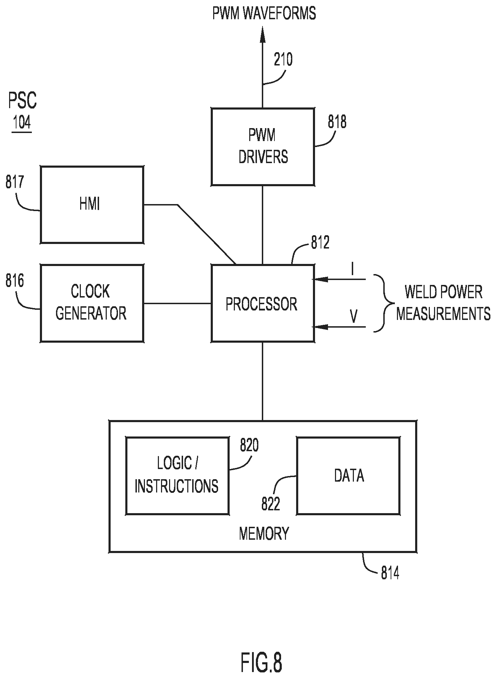

With reference to FIG. 8, there is a block diagram of an example PSC (also referred to as a "controller") 104. PSC 104 includes a processor 812 (e.g., a microcontroller) (which may be implemented in hardware, software, or a combination thereof), a memory 814, a clock generator 816, a human machine interface (HMI) 817, and PWM drivers 818 coupled with each other. HMI 817 may include a display to present information, an alphanumeric keypad through which an operator may enter information, and switches or press buttons (e.g., an ON/OFF user switch and the like) through which the operator may interact with welding system 100. PSC 104 receives sensed voltage and current (i.e., voltage and current measurements), weld power settings, target energies and/or defined droplet sizes, and generates PWM waveforms 210 to control the current and voltage waveforms produced by power supply 102 responsive to the PWM signals.

Memory 814 stores non-transitory computer readable program instructions/logic instructions 820 that, when executed by processor 812, cause the controller to perform the operations described herein. Memory 814 also stores data 822 used and produced by processor 812. Clock generator 816 generates clocks and timing signals used to drive other components of PSC 104. In embodiments, components of PSC 104 may include electronic circuitry such as, for example, programmable logic circuitry, field-programmable gate arrays (FPGA), programmable logic arrays (PLA), a general processor, and/or a digital signal processor (DSP) configured to execute the computer readable program instructions, which may include microcode, firmware, and so on.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method performed by a welding system comprising:
supplying weld power to a consumable electrode that advances toward a workpiece, wherein the weld power includes a direct current (DC) waveform having cycles that each strikes an arc, and transfers a molten metal droplet, from the consumable electrode to the workpiece; and
controlling an energy supplied to the consumable electrode across the cycles by, for each cycle:
integrating the weld power to produce a total energy supplied to the consumable electrode;
comparing the total energy to a target energy to produce a compare result; and
when the compare result indicates that the total energy is not equal to the target energy, adjusting the DC waveform to drive the total energy to the target energy for an ongoing cycle or a subsequent cycle of the DC waveform.

2. The method of claim 1, wherein:
the cycles of the DC waveform respectively include only current pulses that have a positive polarity; and/or
the cycles have a frequency that changes gradually over a transition period that spans the cycles, and controlling includes integrating, comparing, and adjusting for each cycle over the transition period while the frequency changes to maintain the total energy equal to the target energy for each cycle over the transition period, and wherein optionally the consumable electrode advances toward the workpiece at a wire feed speed (WFS) that changes gradually from a first WFS to a second WFS gradually over the transition period.

3. The method of either preceding claim, wherein:
controlling includes controlling a droplet size of the molten metal droplet across the cycles based on the energy;
comparing includes comparing the total energy to the target energy, which produces a defined droplet size; and
adjusting includes adjusting the DC waveform to drive the total energy to the target energy to produce the defined droplet size during the ongoing cycle or the subsequent cycle.

4. The method of claim 3, wherein:
the consumable electrode advances toward the workpiece at a wire feed speed (WFS) that changes gradually from a first WFS to a second WFS gradually over a transition period that spans the cycles, a frequency of the cycles changes gradually in correspondence with the WFS, and controlling includes integrating, comparing, and adjusting for each cycle over the transition period to maintain the droplet size at the defined droplet size over the transition period.

5. The method of any preceding claim, wherein:
each cycle includes a current pulse; and
adjusting includes adjusting one or more of a peak level or a duty cycle of each current pulse.

6. The method of claim 5, wherein:
each cycle includes a background current level and the current pulse, and adjusting further includes adjusting the background current level; or
wherein the current pulse includes a rising edge, a peak, and a falling edge is configured to transfer the molten metal droplet to the workpiece during the falling edge.

7. The method of any preceding claim, further comprising:
implementing a weld power regulation feedback loop concurrently with controlling the energy.

8. The method of any preceding claim, wherein:
integrating includes integrating a produce of a current level of the DC waveform and a voltage level corresponding to a power dissipation over each cycle.

9. The method of any preceding claim, wherein:
the DC waveform is configured for a short-arc welding process; or
the DC waveform is configured for a pulsed welding process.

10. A welding apparatus comprising:
a power supply for supplying weld power to a consumable electrode that advances toward a workpiece, wherein the weld power includes a direct current (DC) waveform having cycles that each strikes an arc, and transfers a molten metal droplet, from the consumable electrode to the workpiece; and
a controller to control an energy supplied by the power supply to the consumable electrode across the cycles by, for each cycle:
integrating the weld power to produce a total energy supplied to the consumable electrode;
comparing the total energy to a target energy to produce a compare result; and
when the compare result indicates that the total energy is not equal to the target energy, causing the power supply to adjust the DC waveform to drive the total energy to the target energy for on ongoing cycle or a subsequent cycle of the DC waveform.

11. The welding apparatus of claim 14, wherein:
the cycles of the DC waveform respectively include only current pulses that have a positive polarity; and/or
the cycles have a frequency that changes gradually over a transition period that spans the cycles, and the controller is configured to perform controlling by integrating, comparing, and causing the power supply to adjust for each cycle over the transition period while the frequency changes to maintain the total energy equal to the target energy for each cycle over the transition period, and wherein optionally the consumable electrode advances toward the workpiece at a wire feed speed (WFS) that changes gradually from a first WFS to a second WFS gradually over the transition period.

12. The welding apparatus of claim 10 or claim 11, wherein the controller is configured to perform:
controlling by causing the power supply to control a droplet size of the molten metal droplet across the cycles based on the energy;
comparing by comparing the total energy to the target energy, which produces a defined droplet size; and
causing the power supply to adjust the DC waveform to drive the total energy to the target energy to produce the defined droplet size during the ongoing cycle or the subsequent cycle.

13. The welding apparatus of claim 12, wherein:
the consumable electrode advances toward the workpiece at a wire feed speed (WFS) that changes gradually from a first WFS to a second WFS gradually over a transition period that spans the cycles, a frequency of the cycles changes gradually in correspondence with the WFS, and the controller is configured to perform controlling by integrating, comparing, and causing the power supply to adjust for each cycle over the transition period to maintain the droplet size at the defined droplet size over the transition period.

14. The welding apparatus of any of claims 10-13, wherein:
each cycle includes a current pulse; and
the controller is configured to cause the power supply to adjust by causing the power supply to adjust one or more of a peak level or a duty cycle of each current pulse.
